Europäisches Patentamt

European Patent Office

Office européen des brevets

(19)

(11) **EP 1 080 448 B1**

(12) **FASCICULE DE BREVET EUROPEEN**

(45) Date de publication et mention
de la délivrance du brevet:
**08.10.2003 Bulletin 2003/41**

(21) Numéro de dépôt: **99920941.4**

(22) Date de dépôt: **28.05.1999**

(51) Int Cl.⁷: **G06T 5/00**

(86) Numéro de dépôt international:
**PCT/FR99/01264**

(87) Numéro de publication internationale:
**WO 99/062030 (02.12.1999 Gazette 1999/48)**

(54) **PROCEDE DE SIMPLIFICATION D'IMAGE ET APPLICATION DUDIT PROCEDE A LA SEGMENTATION ET AU CODAGE D'IMAGES**

VERFAHREN ZUR VEREINFACHUNG EINES BILDES ZUM BENUTZEN IN EINEM
BILDSEGMENTATIONS- UND -CODIERUNGSVERFAHREN

IMAGE SIMPLIFICATION METHOD AND APPLICATION OF SAID METHOD FOR SEGMENTING
AND CODING IMAGES

(84) Etats contractants désignés:
**DE FI GB SE**

(30) Priorité: **29.05.1998 FR 9806854**

(43) Date de publication de la demande:
**07.03.2001 Bulletin 2001/10**

(73) Titulaire: **ASSOCIATION POUR LA RECHERCHE
ET LE DEVELOPPEMENT DES METHODES
ET PROCESSUS INDUSTRIELS (ARMINES)
F-75006 Paris (FR)**

(72) Inventeur: **MEYER, Fernand
F-77250 Veneux les Sablons (FR)**

(74) Mandataire: **Loisel, Bertrand et al
Cabinet Plasseraud,
84, rue d'Amsterdam
75440 Paris Cédex 09 (FR)**

(56) Documents cités:
**EP-A- 0 383 269          EP-A- 0 440 166
WO-A-91/03795          US-A- 5 450 502**

• **ASTOLA J ET AL: "VECTOR MEDIAN FILTERS"
PROCEEDINGS OF THE IEEE, vol. 78, no. 4, 1
avril 1990 (1990-04-01), pages 678-689,
XP000138458 ISSN: 0018-9219 cité dans la
demande**

## Description

La présente invention concerne les procédés de construction d'une représentation simplifiée permettant de représenter une image d'origine, qu'on qualifiera d'image de référence f, constituée par une matrice de pixels à chacun desquels est affectée au moins une valeur radiométrique $f(x)$ (luminance ou chrominance) par une image simplifiée g dont chaque pixel a une valeur radiométrique $g(x)$.

Il existe déjà de nombreux procédés de simplification d'image. Ils constituent souvent une étape préliminaire avant une étape supplémentaire.

Cette étape supplémentaire peut être constituée par une segmentation de l'image, consistant à isoler, en en définissant le contour, certains objets qui apparaissent dans l'image.

Une autre application consiste à comprimer l'image en vue de sa transmission ou de son stockage, par exemple par un algorithme tel que JPEG pour les images fixes ou MPEG pour les séquences d'image. En appliquant l'algorithme de codage à l'image simplifiée g plutôt qu'à l'image f, on peut représenter l'image par moins de données que par codage direct de f. Parmi les procédés de simplification, on peut citer, dans le domaine linéaire, les convolutions (en particulier par des noyaux gaussiens) et, dans le domaine non linéaire, les filtres morphologiques, en particulier les filtres alternés séquentiels.

Ces operateurs connus ont des inconvénients.

Dans certains cas, ils déplacent les contours ou les rendent flous et/ou ils ne traitent pas de manière symétrique les détails blancs et les détails noirs. Les zones où l'image simplifiée g diffère notablement de f ne constituent pas des plateaux, c'est-à-dire des zones connexes où l'image g présente un caractère de régularité. En conséquence, l'effet de la simplication est limité.

On connaît déjà (WO 9103795) un procédé de lissage d'image par simple opération arithmétique d'ajustement par moindre carrés effectué sur des pixels particuliers. Cette solution n'écarte pas les défauts des systèmes antérieurs tels que mentionnés plus haut.

La présente invention vise à fournir un procédé de simplification d'image répondant mieux que ceux antérieurement connus aux exigences de la pratique, notamment en fournissant une image simplifiée présentant un aspect régulier dans les zones où l'image simplifiée g est notablement différente de f. Elle vise également à fournir un procédé permettant de fournir une image donnant à un algorithme de segmentation ou de codage une efficacité plus grande que lorsque cet algorithme est appliqué à l'image d'origine f.

L'invention est définie dans la revendication 1 ci-jointe. $\zeta f$, déduite de f et supérieure ou égale à f, par diminution de g du montant minimum qui permet de constituer un plateau dans toute particule connexe où $g > \zeta f$, sauf dans les zones où la diminution de g est limitée par la valeur correspondante de $\zeta f$, qui est localement supérieure à la valeur du plateau, $\eta$ et $\zeta$ étant des fonctions prédéterminées de f.

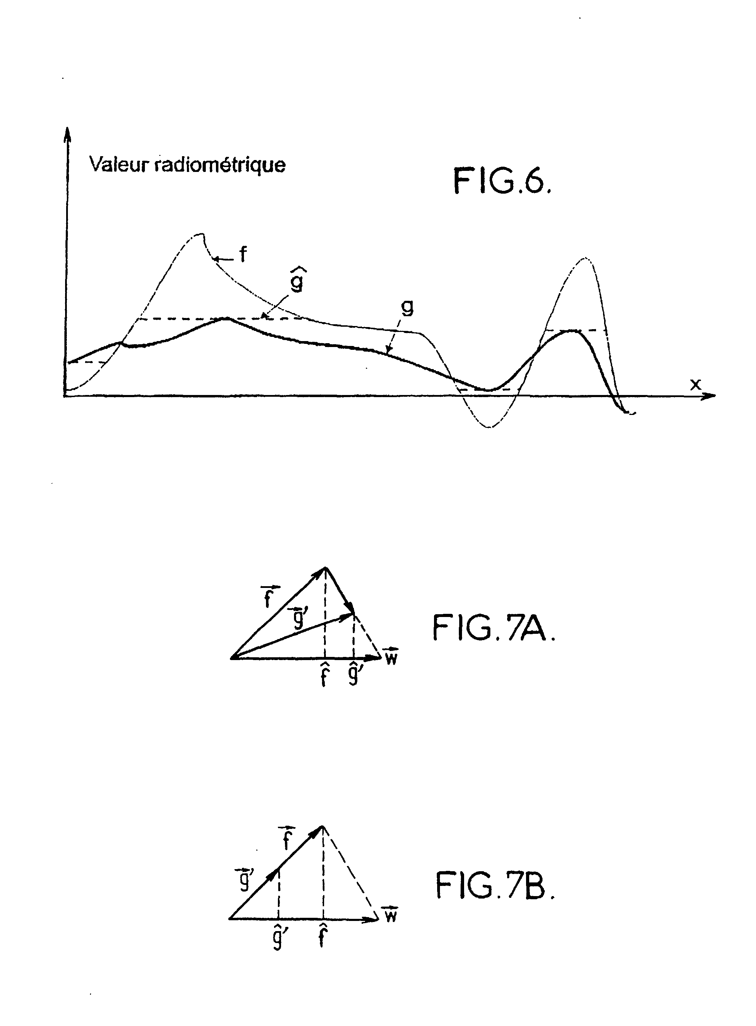

Les fonctions $\eta$ et $\zeta$ peuvent être duales ou non. Elles peuvent être constituées par une fonction arithmétique et/ou morphologique. La figure 6 est destinée à donner une indication tangible de résultats obtenus par l'invention dans le cas d'un algorithme de nivellement particulièrement simple, le résultat final étant ainsi représenté.

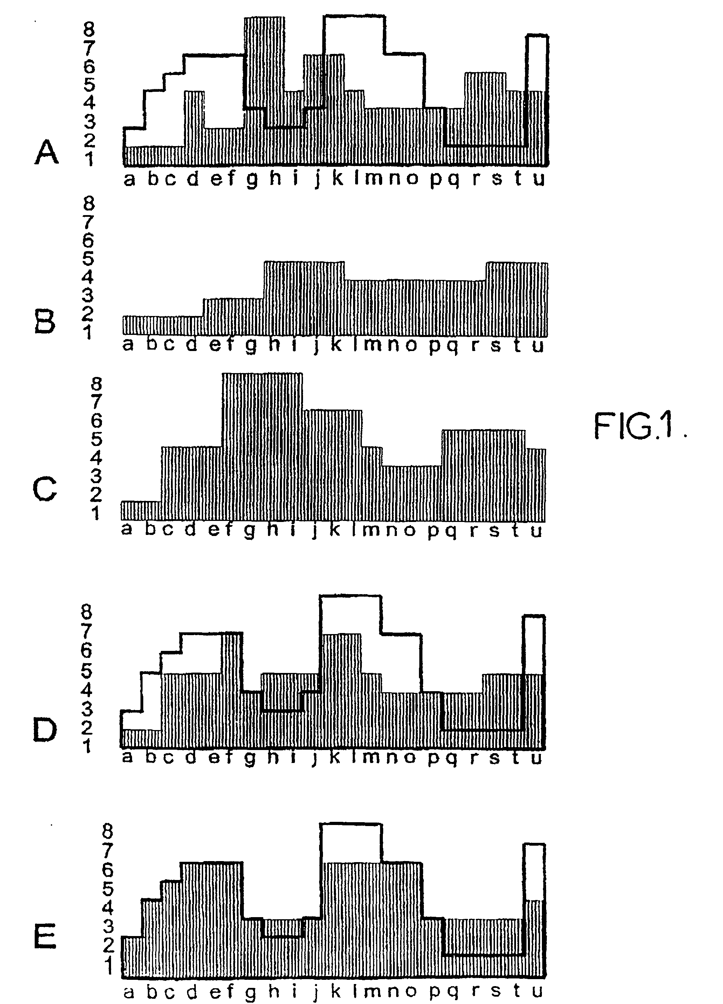

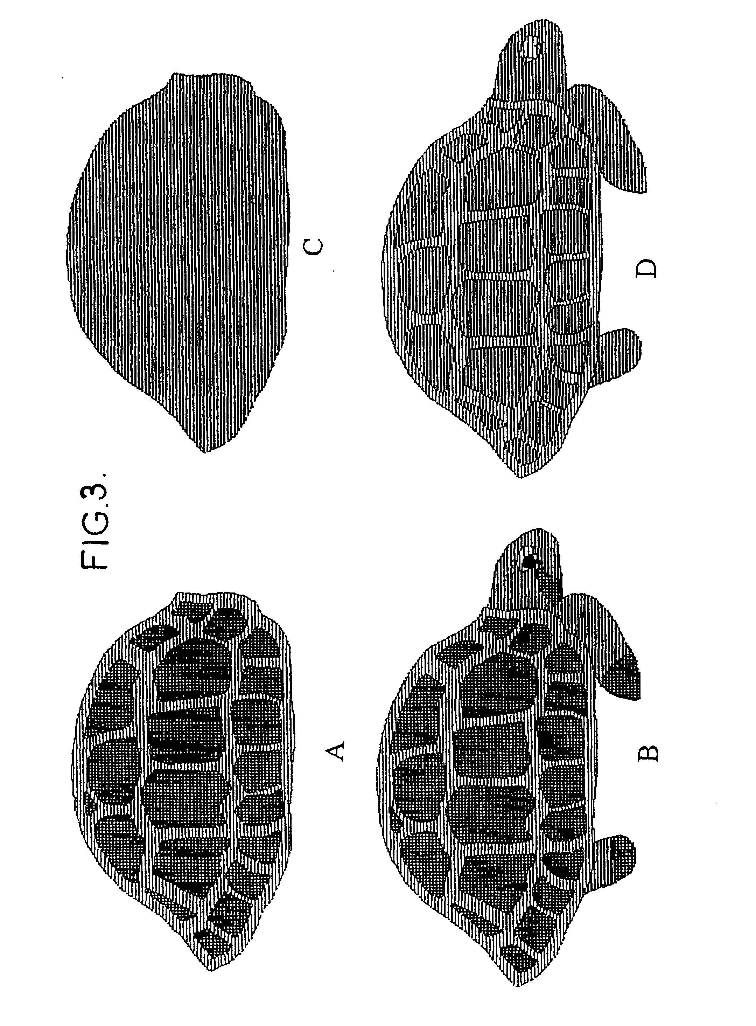

Sur cette figure, l'image d'origine est représentée par une courbe continue f (par opposition à la représentation quantifiée et discrète des figures 1 et 3). L'image g est une représentation filtrée de f. L'image simplifiée ou nivellement g est obtenue par un algorithme donnant naissance à des plateaux de niveau constant. Sur toute particule connexe de f :

- où $g < f$, $\hat{g}$ est obtenu en augmentant g jusqu'à ce qu'il atteigne le niveau le plus élevé de g dans la particule ou atteigne f ;
- où $g > f$, g est obtenu en diminuant g jusqu'à ce qu'il atteigne le niveau le plus bas de g dans la particule ou atteigne f.

Plusieurs possibilités de choix d'une image marqueur existent.

Cette image marqueur peut être élaborée manuellement et être alors dessinée sous forme d'une courbe ou d'une surface qui gomme les irrégularités de la courbe ou de la surface representative d'une image h qui peut être déduite de l'image de référence f.

Plus souvent, l'image marqueur g sera déduite de l'image de référence f par un procédé connu de filtrage, tel que l'un de ceux mentionnés plus haut. Par exemple, l'image marqueur g peut être construite à partir d'une image h, égale ou non à l'image f, en appliquant à h un filtrage, un lissage ou une représentation sous forme d'image mosaïque ; h peut être une image de la scène représentée dans f, mais pris sous un angle différent ; h peut être une image précédant l'image f dans le cas d'une séquence d'images (séquence vidéo ou film).

Le procédé suivant l'invention permet d'obtenir une représentation simplifiée qu'on peut qualifier de "nivellement", g ayant un aspect très régulier.

Dans le cas d'une séquence d'images successives présentant un degré de corrélation élevé, par exemple dans le cas de la vidéo ou du cinéma, on peut utiliser un masque de segmentation produit à partir de l'image d'ordre n comme image marqueur g pour produire un nivellement de l'image n+1. Pour assurer une meilleure stabilité de l'image lorsqu'on visualise les résultats du traitement de la séquence, on peut avoir avantage à traiter les images successives de la séquence comme autant de coupes d'un volume tri-dimensionnel dont le temps constituerait la troisième dimension. On construit alors des marqueurs et on procède au nivellement associé sur le volume 3D ainsi constitué selon une des méthodes exposées dans la présente demande.

On constitue ainsi un volume 3D par juxtaposition des images successives d'une séquence vidéo le long d'un axe temporel, auquel on applique un nivellement 3D utilisant une image marqueur obtenue dans le volume 3D.

Dans le cas des images couleurs, on obtient des nivellements aux couleurs plus vives et plus fidèles à l'original si on prend comme images marqueurs les résultats de filtres médians vectoriels, par exemple celui décrit dans l'article de J. Astola, P. Haavisto, Y. Neuvo : "Vector Médian Filters, Proceedings of the IEEE", vol. 78, n° 4, pages 678-689, avril 1990, auquel on pourra se reporter.

Quel que soit le mode de réalisation adopté, l'image g présente des zones connexes d'aspect très régulier ou "plateaux" dans routes les zones où l'image g est notablement différence de f. Les contours des objets présents dans l'image g sont localisés avec la même précision que dans l'image f, ne subissent pas de déplacements et ne sont pas rendus flous, le nivellement traite symétriquement les détails blancs sur fond noir et les détails noirs sur fond blanc, contrairement à ce qui se passe pour les algorithmes classiques. En conséquence, on produit sans dégradation des nivellements pour les images couleur en appliquant le procédé aux différents composants d'une image couleur. Cependant, le résultat dépend sensiblement de l'espace de représentation des couleurs, qu'il soit du type RGB ou HLS ou tout autre espace couleur. Un autre inconvénient est de devoir construire un marqueur et réaliser un nivellement séparément pour chaque canal couleur, ce qui peut constituer un volume de calcul trop important pour certaines applications. Pour cette raison, on peut avoir intérêt à recourir à un nivellement unique à la place de trois nivellements séparés. Pour ce faire, on remplace l'image couleur vectorielle par une image numérique dont la valeur en chaque point est une fonction connue des trois couleurs en ce point, par exemple par un produit scalaire avec un vecteur de référence, produisant ainsi une image à teintes de gris unique. Par la suite, il ne sera fait référence qu'à ce cas particulier pour simplifier la description. Un nivellement unique sera appliqué à cette image scalaire et le résultat sera projeté dans l'espace couleur initial. Cette procédure peut être appelée nivellement pseudo-scalaire. Elle peut être détaillée comme suit.

Lorsqu'on dispose de plusieurs valeurs radiométriques en chaque pixel, comme c'est le cas d'une image couleur ou de l'image d'un champ de vitesses, on parle d'image vectorielle. On obtiendra un nivellement de l'image vectorielle en appliquant un nivellement à chaque composante isolément. Cela a deux inconvénients : d'une part une quantité de calcul trop lourde pour certaines applications, et d'autre part un résultat dépendant du repère choisi pour représenter les vecteurs. Une solution consiste à appliquer un nivellement à une image scalaire obtenue par produit scalaire entre l'image vectorielle de départ et une image vectorielle de référence. Dans le cas d'une image couleur, l'image vectorielle de référence peut par exemple contenir en chaque pixel un vecteur constant choisi sur l'axe allant du noir au blanc. Dans le cas d'un champ de vitesses, on pourra prendre par exemple en chaque pixel le vecteur vitesse moyen.

On obtient ainsi une image scalaire à laquelle on peut appliauer un nivellement ordinaire. Le résultat de ce nivellement est ensuite projeté dans l'espace vectoriel de départ, de manière à retrouver un champ de vecteurs qui présence plus de zones plates que le champ de vecteurs de départ.

L'application d'un algorithme de segmentation à g plutôt qu'à f permet d'obtenir facilement les contours des objets présents dans g, ce qui n'aurait pas été le cas dans f. Un premier avantage est qu'un degré de compression plus élevé peut être obtenu. L'image résultant du codage de compression puis du décodage de l'image g est par ailleurs plus agréable à regarder que l'image provenant du codage et du décodage de l'image f, sur laquelle les blocs de codage par transformée bidirnenslonnelle deviennent visibles aux taux de compression élevés. Dans les deux cas, l'image restituée après codage présente des pertes, mais l'effet visuel de la dégradation est plus faible en cas de mise en oeuvre de l'invention, même aux faibles débits.

Plus l'image marqueur g choisie est éloignée de l'image f, plus le nivellement est régulier. Cela permet de construire des familles d'images simplifiées allant du plus proche au plus grossier, parmi lesquelles on peut choisir, par exemple en fonction des disponibilités de stockage ou de transport en cas de compression ultérieure. On peut également produire des nivellements en cascade, tout nouveau nivellement d'une représentation simplifiée g étant aussi un nivellement de f.

On peut alors choisir dans la famille le nivellement le plus approprié.

Dans le cas de la segmentation, ce nivellement optimum sera celui qui contient les objets d'intérêt, mais pas de détails inutiles.

Dans le cas du codage, on choisira celui des nivellements à l'entrée du codeur qui produit le débit le plus proche des disponibilités de ce codeur.

Dans tous les cas, on peut considérer que le procédé part d'un couple d'une image f de référence et d'une image marqueur g, qu'on veut transformer le moins possible pour en déduire une image simplifiée g, qu'on peut qualifier de nivellement de f.

Par la suite, on sera amené à utiliser les termes "notablement inférieur" et "notablement supérieur".

On dira que g(x) est notablement inférieur à f(x) lorsque g(x) < ηf(x), où p désigne une tranformation de voisinage $\eta f \leq f$.

Ce façon similaire, on dira que g(x) est notablement supérieur a f(x) lorsque g(x)>ζf(x), ζ étant une transformation de voisinage ζ qui en chaque point de f produit une valeur ζf(x)≥f(x).

Parmi les cas particuliers importants, on peut citer les suivants.

La transformation peut être la transformation identique, c'est-à-dire ζf=ηf=f.

Dans ce cas l'expression "g(x) est notablement inférieure à f(x)" signifie simplement que g(x) est inférieur à f(x) au sens ordinaire.

On peut également adopter ζf=f+λ et ηf=f-λ, λ désignant une valeur constante. Par exemple si λ=5, l'expression "g(x) est notablement inférieur à f(x)" signifie que g(x)<f(x)-5.

Au lieu d'utiliser des fonctions arithmétiques, on peut utiliser des fonctions morphologiques, par exemple ζf=φf et ηf=γf, γ désignant une ouverture de la fonction f et φ une fermeture de f.

Des fonctions arithmétiques et morphologiques peuvent être combinées, par exemple en adoptant ζf=φf+λ et ηf=γf-λ.

L'obtention d'un nivellement s'effectue généralement par une itération qu'on achève lorsque la représentation présence des plateaux. Cela implique de définir :

- un mécanisme pour changer la valeur de g, étroitement associé à la caractérisation des plateaux vers lesquels doit tendre g,
- l'ordre des pixels selon lequel on va transformer g,
- un critère d'arrêt permettant de reconnaître que l'image obtenue g(x) est bien un nivellement de f.

Plusieurs approches sont possibles. Mais on peut définir un algorithme permettant, de proche en proche, de transformer une image g quelconque en un nivellement g de f, construit à l'aide de deux transformations de voisinage α et β, vérifiant, pour tout pixel x et toute fonction g, αg(x)≥g(x) et βg(x)≤g(x).

De telles transformations seront définies plus loin.

Le critère d'arrêt, c'est-à-dire la condition qu'on estime suffisante pour que l'image obtenue g(x) soit un nivellement de f peut être :

- en tout pixel où l'image $\hat{g}$(x) est notablement inférieure à l'image f, c'est-à-dire lorsque g(x)<ηf(x), l'image g(x) vérifie g(x)= inf (αg(x), ηf(x)) =αg(x)∧ηf(x), inf désignant le minimum ;
- en tout pixel où l'image g est notablement supérieure à l'image f, c'est-à-dire lorsque g(x)>ζf(x), l'image g vérifie g(x)= sup (βg(x), ζf(x)) = βg(x) ∨ζf (x)

Le mécanisme pour changer la valeur de g peut être le suivant : si g est une image ne vérifiant pas le critère précédent en un pixel x , on définit une nouvelle valeur g¹ (x), dont le rôle sera donné plus loin, par un critère qui peut être :

1. Si g(x)< inf ($\alpha\hat{g}$ (x), ηf (x)) =$\alpha\hat{g}$ (x)∧ηf (x), on définit une nouvelle valeur g¹ (x) égale à inf (αg(x),ηf(x)) =αg(x)∧ηf(x). Cette nouvelle valeur est plus grande que l'ancienne valeur g(x).

2. Si g(x)> sup ($\beta\hat{g}$(x), ζf(x))=$\beta\hat{g}$(x) ∨ζf(x), on définit une nouvelle valeur g¹ (x) égale à sup (βg(x),ζf(x)) =βg(x)∨ζf(x). Cette nouvelle valeur est plus petite que l'ancienne valeur g(x).

3. Si aucune des conditions précédentes n'est vérifiée, on affecte à g¹(x) l'ancienne valeur g(x).

α et β sont deux transformations de voisinage, qui peuvent être de différents types, comme on le verra plus loin.

Utilisation de transformations auxiliaires :

il existe un cas particulier qui simplifie les critères 1 et 2 ci-dessus : si ζf=ηf=f, l'algorithme précédent est équivalent au suivant : si g(x)≠(f<x)∨βg(x)) ∧ αg(x)), on remplace g(x) par (f(x)∨βg(x)) ∧ αg(x).

Dans ce cas (f(x) ∨βg(x)) ∧ αg(x)=(f(x)∧ αg (x)) ∨βg (x)).

On peut caractériser les plateaux de la façon suivante : dans toute particule connexe de pixels où g (x)<ηf(x), un plateau est caractérisé par le fait que, en tout pixel y de ce plateau, on a g(y)=αg(y). Et dans toute particule connexe de pixels où g(x)>ζf(x), un plateau est caractérisé par le fait que, en tout pixel y de ce plateau, on a g(y)=βg(y).

On peut définir deux transformations auxiliaires, appelées sous-nivellement et sur-nivellement, grâce auxquelles on peut réaliser des nivellements rapides.

(a) Construction des sous-nivellements

On obtiendra un sous-nivellement, également appelé ouverture par reconstruction, en modifiant le mécanisme pour construire la nouvelle valeur de g¹(x) de la façon suivante :

- on garde le critère 1 décrit ci-dessus,
- dans tous les autres cas, on affecte à g¹ (x) la valeur de f(x).

Pour affecter g¹ (x), on utilisera les mêmes stratégies que celles qui sont décrites pour les nivellements, à savoir une des stratégies d'affectation de g¹ (x) décrites plus loin. On notera niv⁻ (f,g) le sous-nivellement obtenu en prenant f comme image de référence et g comme image marqueur.

(b) Construction des sur-nivellements

De manière symétrique, on obtiendra un sur-nivellement, également appelé fermeture par reconstruction, en modifiant le mécanisme pour construire la nouvelle valeur de $g^1$ (x) de la façon suivante :

- on garde le critère 2 décrit ci-dessus,
- dans tous les autres cas, on affecte à $g^1(x)$ la valeur de f(x).

Pour affecter $g^1$ (x), on utilisera une des stratégies décrites pour les nivellements plus loin. De la même façon, on obtiendra après convergence un sur-nivellement ou fermeture par reconstruction. On notera $niv^+(f,g)$ le sur-nivellement obtenu en prenant f comme image de référence et g comme image marqueur.

(c) Construction des nivellements à l'aide des sous-nivellements et sur-nivellements

Ces transformations sont plus simples à mettre en oeuvre que les nivellements complets, car elles s'appuient sur un critère unique, alors que le nivellement complet en utilise deux. De plus, le résultat ne dépend pas de l'ordre du balayage. On peut cependant obtenir un nivellement complet en mettant en oeuvre un sur-nivellement suivi d'un sous-nivellement :

$niv^1$ (f,g) = ($niv^+$ ($niv^-$ (f,g), g), ce qui signifie que pour le sur-nivellement, on prend l'image $niv^-$(f,g) comme référence et l'image g comme marqueur,
        ou bien alternativement un sous-nivellement suivi d'un sur-nivellement :
$niv^2$ (f,g) = ($niv^-$ ($niv^+$ f,g),g), ce qui signifie que pour le sous-nivellement, on prend l'image $niv^+$ (f,g) comme reference et l'image g comme marqueur.

Dans le cas très fréquent où les fonctions ζ et η sont la fonction "identique", les nivellements $niv^1$ et $niv^2$ sont identiques.
Plusieurs stratégies sont possibles pour affecter $g^1(x)$.
Deux d'entre elles sont les suivantes :

1. On examine tous les pixels de l'image et on calcule leur nouvelle valeur. On obtient ainsi une nouvelle image $g^1$.

- Si $g^1$ (x)=g(x), l'image obtenue est un nivellement de f(x) et on peut arrêter le traitement ;
- si $g^1(x) \neq$ g(x), on remplace l'image g par l'image $_g1$.

Ce faisant on a effectué la première passe d'un traitement parallèle. Le résultat ne dépend pas de l'ordre de traitement des pixels si on attend, pour remplacer l'image g par l'image $g^1$, que tous les pixels aient été traités (transformation parallèle).
2. Dès que la nouvelle valeur $g^1$ (x) est connue pour un pixel x, on remplace l'ancienne valeur g(x) par cette nouvelle valeur. Cette nouvelle valeur sert au calcul des nouvelles valeurs des points adjacents. Ce procédé, où l'image g est modifiée après le calcul de tout nouveau pixel, peut être appelé récursif ou séquentiel. Le résultat dépend alors de l'ordre de traitement des pixels.

Plusieurs stratégies permettent d'atteindre plus ou moins rapidement la convergence vers le nivellement.

1. On peut effectuer des transformations parallèles successives jusqu'à ce qu'une nouvelle passe d'un traitement parallèle ne modifie plus l'image : on a alors atteint la convergence.
2. On peut effectuer des transformations récursives successives et le résultat dépendra alors de l'ordre de balayage. On obtiendra une vitesse de convergence plus rapide en alternant les balayages de l'image : un balayage de haut en bas et de gauche à droite, suivi d'un balayage de bas en haut et de droite à gauche. Le traitement des zones sombres et des zones claires sera symétrique si on applique ces transformations récursives, non pas à l'image initiale mais à l'image obtenue après une passe de traitement parallèle : dans ce cas, pour les nivellements les plus courants, l'ordre de balayage n'influera plus sur le résultat.
3. On peur appliquer les transformations récursives, non pas selon l'ordre de balayage de la matrice des pixels, mais en définissant un ordre de traitement selon la valeur des pixels. On traitera les pixels pour lesquels g(x) est notablement inférieur à f(x) dans l'ordre des valeurs décroissantes de g (x) et les pixels pour lesquels l'image g(x) est notablement supérieure à l'image f(x) dans l'ordre des valeurs croissantes de g(x).

On peut également utiliser pour gérer l'ordre de traitement des pixels des files d'attente hiérarchiques.
Comme précédemment, si on tient à ce que le traitement des zones sombres et des zones claires soit symétrique, on applique ces transformations récursives, non pas à l'image initiale, mais à l'image obtenue après une passe de traitement parallèle.
Les deux transformations de voisinage α et β déjà mentionnées doivent vérifier, pour tout pixel x, $\alpha g$ $(x) \geq g(x)$ et
$\beta g(x) \leq g(x)$. On peut en particulier adopter :

1. $\alpha g = \delta g$ et $\beta g = \epsilon g$, où δ et ε représentent respectivement la dilatation (la valeur du point central est remplacée par la valeur maximale dans son voisinage) et l'érosion (la valeur du point central est remplacée par la valeur minimale dans son voisinage) élémentaires.
Dans ce cas, pour $\eta f = \zeta f = f$, dans toute particule connexe sur laquelle g<f l'image g est plate. De même, dans toute particule connexe sur laquelle $\hat{g}>f$ l'image g est plate. De plus, toute zone plate pour l'image f sera encore plate pour l'image g. Par contre si pour deux pixels voisins a et b l'image g présente la transition g(a)>g(b), alors l'image f présente une transition plus forte qui encadre la transition de g:

$$f(a) \geq \hat{g}(a) > \hat{g}(b) \geq f(b)$$

Ceci signifie que les contours de tous les objets présents dans g(x) sont localisés avec la même précision que dans l'image de référence f(x).

2. $\alpha g=g\vee(\delta g-\lambda)$ et $\beta g=g\wedge(\varepsilon g+\lambda)$, où $\lambda$ est un seuil de valeur constante. Pour ce nivellement, un plateau de l'image g est une zone dans laquelle il existe entre tout couple de pixels (x,y) un chemin (x=$a_0$, $a_1$, $a_2$, .... , $a_n$=y) tel que les pixels $a_i$ et $a_{i+1}$ soient voisins sur la trame et

que la valeur absolue de la différence des niveaux radiométriques

$$\left| \hat{g}(a_{i+1}) - \hat{g}(a_i) \right|$$

soit inférieure au seuil $\lambda$.

3. $\alpha$ est une dilatation quelconque vérifiant $\alpha g(x) \geq g(x)$ et $\beta$ est une érosion quelconque vérifiant $\beta g(x) \leq g(x)$.

4. $\alpha g=g\vee\delta\gamma g$ et $\beta g=g\wedge\varepsilon\phi g$, où $\gamma$ est une ouverture et $\phi$ une fermeture.

5. $\alpha g=g\vee(\delta\gamma g-\lambda)$ et $\beta g=g\wedge(\varepsilon\phi g+\lambda)$, où $\gamma$ est une ouverture et $\phi$ une fermeture et où $\lambda$ est une valeur constante.

Le procédé est applicable à une image en couleurs pour laquelle on affecte plusieurs valeurs radiométriques à chaque pixel. On peut obtenir un nivellement d'une image en couleurs en construisant indépendamment un nivellement de chacune de ses composantes. Le procédé est applicable quel que soit le mode de représentation adopté, notamment RGB, YUV et HLS (couleur, niveau et saturation).

L'invention sera mieux comprise à la lecture de la description qui suit de modes particuliers d'exécution, donnés à titre d'exemples. La description se réfère aux dessins qui l'accompagnent, dans lesquels :

- la figure 1 montre un exemple d'application du procédé de nivellement à une image f limitée à une ligne ;
- la figure 2 montre les étapes successives du nivellement et de segmentation d'une image bidimensionnelle fixe ;
- la figure 3 montre schématiquement les étapes de segmentation d'une image appartenant à une séquence ;

- les figures 4 et 5 montrent des exemples de choix de segmentation avantageusement utilisables après nivellement ;
- la figure 6 est un schéma montrant un nivellement effectué sur une image à une seule dimension dans le cas d'un algorithme de nivellement particulièrement simple, le résultat final étant ainsi représenté ;
- les figures 7A et 7B montrent deux étapes d'un nivellement vectoriel pseudo-scalaire.

Les étapes montrées en figure 1 illustrent l'algorithme de construction pas à pas d'un nivellement simple caractérisé par :

- $\eta f=f$ et $\zeta f=f$
- $\alpha g=\delta g$ et $\beta g=\varepsilon g$, où $\delta$ et e représentent respectivement la dilatation (la valeur du point central est remplacée par la valeur maximale dans son voisinage) et l'érosion (la valeur du point central est remplacée par la valeur minimale dans son voisinage) élémentaires.

La ligne A montre une ligne d'une image de référence f, en traits gras, et une image marqueur, en traits fins avec sous-graphe hachuré. A chaque pixel (a, b, c..u) est associée une valeur radiométrique allant de 1 à 8. Par exemple la valeur radiométrique de l'image f au pixel d est égale à 6 et celle de l'image g au même pixel d est égale à 4. L'image marqueur g va être transformée en g , nivellement de f.

Dans une première phase, on construit, à partir de l'image g :

- $\varepsilon g$, image érodée de g, et
- $\delta g$, image dilatée de g.

La valeur radiométrique de l'érodé eg (respectivement du dilaté $\delta g$) en chaque pixel x est égale à la valeur minimale (respectivement maximale) des valeurs prises par g au pixel x ou en l'un des pixels voisins de x sur la matrice des pixels. Par exemple au pixel k, les deux voisins de k sont les pixels j et l ; g prend la valeur 6 aux pixels j et k et la valeur 4 au pixel l. La valeur prise par $\varepsilon g$ au pixel k sera la plus petite des 3 valeurs, soit 4 (ligne B).

Le dilaté $\delta g$ par contre prendra la plus grande des trois-valeurs, soit 6 (ligne C).

On effectue une première itération de la transformation de f en nivellement g de f. En chaque pixel x, on compare les valeurs radiométriques de f et de g.

- Si g(x)<f(x), on choisit entre les deux valeurs de $\delta g(x)$ et f(x) celle qui est la plus petite : $\delta g(x)\wedge f(x)$;
- de manière symétrique, si g(x)>f(x), on choisit entre les deux valeurs de $\varepsilon g(x)$ et f(x) celle qui est la plus grande : $\varepsilon g(x)\vee f(x)$.

Par exemple :

- g(e)<f(e) : on choisit pour nouvelle valeur de g(e) la plus petite des deux valeurs de δg (e) = 4 et f(e)=6, soit 4.
- g(i)>f(i) : on choisit pour nouvelle valeur de g(i) la plus grande des deux valeurs de eg(i)=4 et f(i)=2, soit 4.
- g(g)>f(g) : on choisit pour nouvelle valeur de g(g) la plus grande des deux valeurs de εg(g)=2 et f(g)=3, soit 3.

On obtient ainsi la représentation donnée par la ligne D.

A partir de là, on effectue de nouvelles passes pour arriver à la convergence. En appliquant les passes suivantes au résultat de la première passe parallèle, l'ordre et le choix d'un mode parallèle ou séquentiel n'a plus d'influence sur le résultat final.

La ligne E montre le nivellement ĝ de f, obtenu à convergence.

Le résultat dépend à la fois de f et de g. Il présente des zones plates beaucoup plus importantes que f. Cependant les transitions de ĝ suivent fidèlement celles de f.

## APPLICATION A LA SEGMENTATION

La segmentation d'une image f consiste à isoler certains objets représentés dans l'image f, en les contourant ou bien en affectant à tous leurs pixels une même valeur d'étiquette.

Pour ceci, de nombreux algorithmes de segmentation ont été publiés.

Suivant un des aspects de l'invention, on substitue un nivellement à l'image d'origine avant segmentation, quel que soit l'algorithme de segmentation choisi. La double propriété des nivellements (simplifier l'image en générant des plateaux tout en préservant les contours des objets restants) rend cette substitution particulièrement intéressante : il sera plus facile à l'algorithme de segmentation choisi d'extraire les contours des zones d'intérêt dans l'image nivelée que dans l'image initiale.

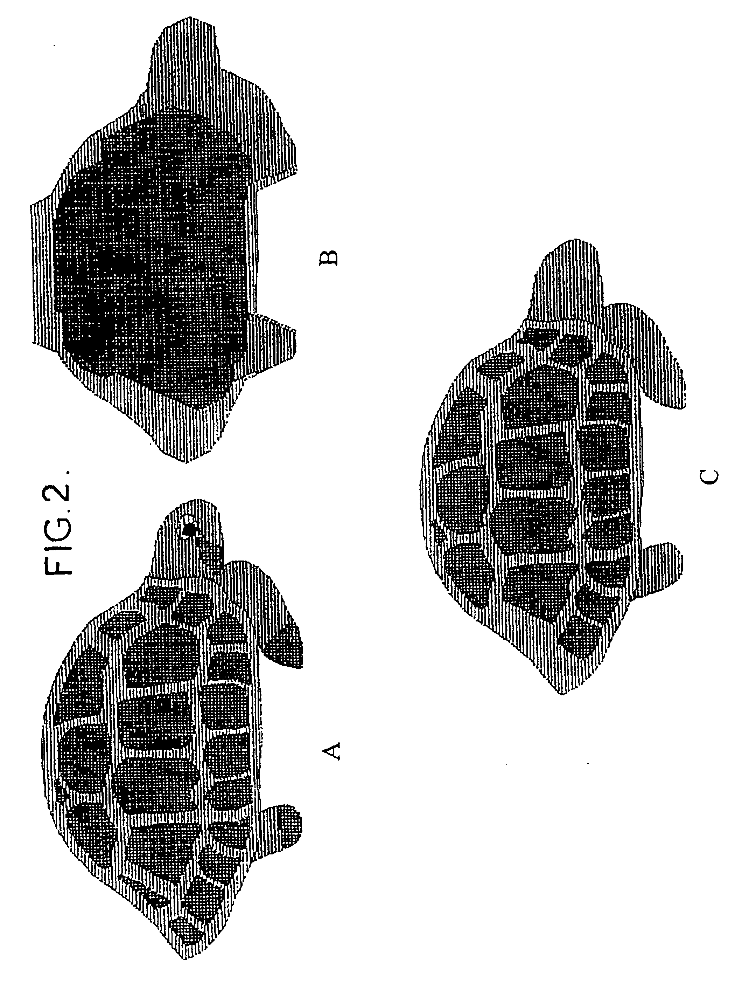

Les figures 2 et 3 illustrent deux situations typiques de segmentation : la segmentation d'objets dans une image fixe, le suivi d'objets dans une séquence. Dans les deux cas, des valeurs de gris différentes sont schématisées par des modes de hachures différents, pour permettre la reproduction des figures.

## Cas d'une image fixe

Les figures 2A-2C illustrent le problème de segmentation.

On veut trouver le contour de la tortue avec un algorithme de segmentation donné.

Une image simplifiée de l'image de départ à l'aide d'un filtre alterné séquentiel donne la figure 2B où les détails ont été gommés, mais les contours de la tortue n'ont pas été préservés.

En utilisant cette image simplifiée comme image marqueur pour un nivellement, on obtient l'image de la figure 2C. Cette image résultante comporte beaucoup moins de détails que l'image de départ, mais ses contours sont parfaitement fidèles.

## Cas d'une séquence

Cette situation se rencontre fréquemment lorsqu'on veut segmenter une séquence vidéo, dans laquelle on veut suivre une zone ou un objet d'intérêt. Dans les illustrations suivantes, les lignes A et B de la figure 3 représentent la tortue aux temps t et t+1, en régime permanent : on a segmenté l'image au temps t et obtenu les contours représentés à la ligne C. Pour simplifier la segmentation dans l'image t+1, on construit un nivellement de cette image à partir d'une image marqueur g dérivée du masque de segmentation de l'image au temps t.

S'il s'agit de segmenter des objets sombres sur fond clair, par exemple, on peut prendre le masque de segmentation lui-même dans lequel on a mis une valeur sombre représentative des objets à segmenter. C'est ce qui est représenté ici. Pour traiter des objets clairs sur fond sombre, on reprend le même traitement après avoir inverse l'écheLle des niveaux de gris. L'image de la ligne C a servi d'image marqueur pour produire un nivellement de l'image au temps t+1, représentée à la ligne B. Le résultat du nivellement se trouve à la ligne D.

En présence d'un fond présentant des zones sombres et claires, on peut prendre comme image marqueur g l'image initiale vue à l'intérieur d'une bande de largeur donnée s'étendant de part et d'autre des contours du masque de segmentation de l'image t et suffisamment large pour contenir les contours qu'on cherche à détecter dans l'image au temps t+1. Le reste de l'image marqueur prend une valeur constante. Le nivellement appliqué à ce marqueur va présenter les contours intéressants dans l'image t+1 avec un grand contraste, et ceux qui en sont plus éloignés vont apparaître peu contrastés.

## Exemples de chaîne de segmentation avantageuse

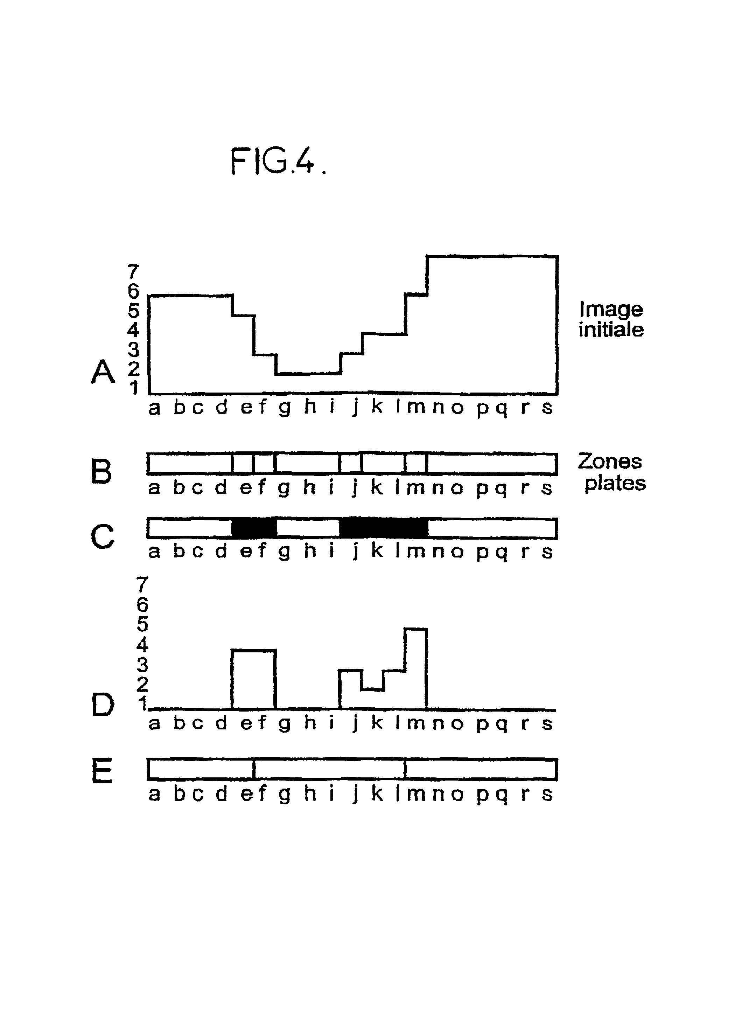

Après avoir remplacé l'image f qu'on cherche à segmenter par un de ses nivellements g, on peut employer n'importe quel algorithme de segmentation. Mais on peut également tirer parti de la présence de plateaux étendus dans l'image nivelée pour aider la segmentation. Les deux chaînes de segmentation suivantes sont des exemples de telles chaînes. Segmentation par sélection de zones plates et ligne de partage des eaux (figure 4)

La ligne A montre le résultat d'un nivellement d'une image (non représentée) à segmenter. La ligne B montre le résultat de la recherche de toutes les zones plates. La ligne C montre la sélection des trois zones plates de surface supérieure à 2 pixels. Les zones plates non sélectionnées font alors partie d'une zone d'indétermination, à l'intérieur de laquelle on calcule une image gradient à partir de l'image initiale (ligne D). En utilisant les trois zones plates sélectionnées comme marqueurs, on construit la ligne de partage des eaux associée sur l'image gradient i ; on étend ainsi les trois marqueurs pour obtenir la partition finale, constituant le résultat de la segmentation (ligne E) .

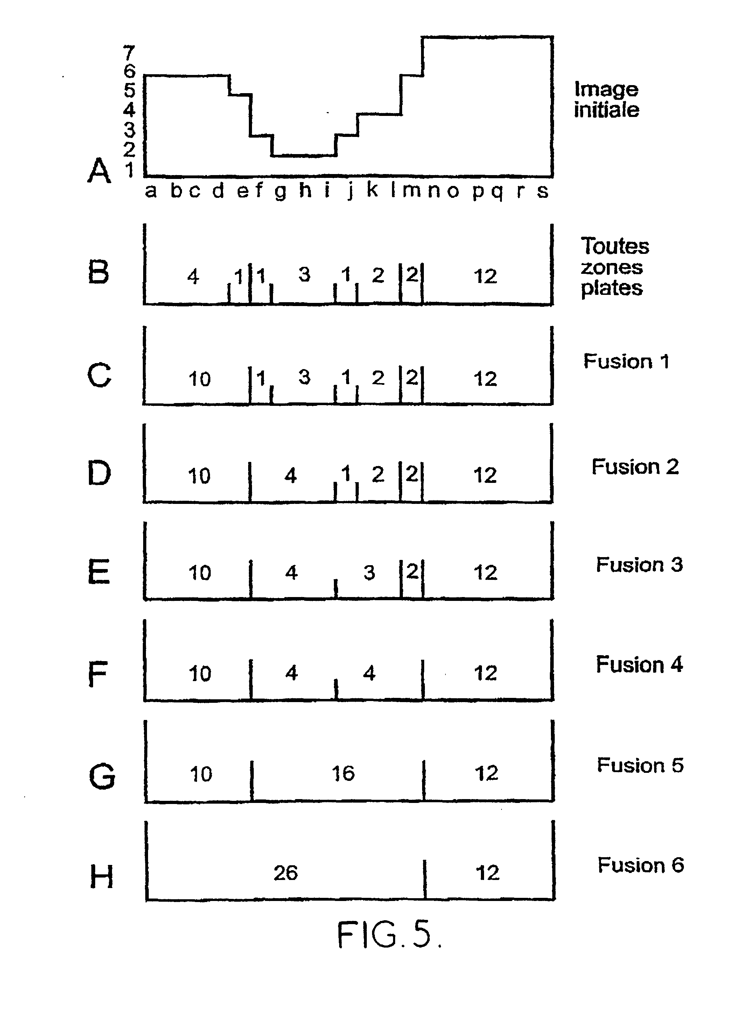

## Segmentation par détection de zones plates et fusion de région (figure 5)

Une deuxième manière de segmenter, complémentaire de la précédente, prend également les plateaux d'un nivellement comme point de départ de la segmentation. La ligne A représente l'image de départ. On détecte tous les plateaux dans cette image. Chaque ligne frontière y a une hauteur égale au contraste moyen entre les plateaux situés de part et d'autre de cette frontière. Ainsi le plateau constitué des pixels (a,b,c,d) et le plateau constitué par le pixel (e) sont séparés par une frontière de hauteur 1. Au-dessus de chaque plateau est indiqué un chiffre, exprimant l'importance du plateau. Pour cela on peut choisir par exemple la surface du plateau, ou bien une mesure du contraste le long de ses frontières ou bien encore une combinaison de ces deux mesures. C'est ce qui est fait ici, où est affecté à chaque plateau le produit de la surface du plateau par la valeur du plus faible contraste mesuré le long de ses frontières : par exemple le plateau (k,l) a une frontière avec le plateau (j) de hauteur 1 et une frontière avec le plateau (m) de hauteur 2 alors que sa surface est de 2 pixels ; on lui affecte une mesure égale à 2, égale au produit de la surface 2 par la mesure de contraste 1.

La segmentation se fera par fusions successives entre plateaux adjacents. Le plateau de mesure la plus faible est absorbé à chaque étape par un de ses plateaux voisins ; après absorption, on recalcule la mesure du plateau nouvellement formé et on procède à une nouvelle fusion. Les étapes de fusion successives sont illustrées sur les lignes C à H.

Par exemple le résultat de la fusion 4 a produit 4 régions (ligne F). Ces régions de plus faible valeur ont une valeur de 4 ; une de ces régions va être absorbée par l'autre région de valeur 4 pour former une nouvelle région de surface 8 bordée par deux frontières de contraste 2 ; la nouvelle région a ainsi une valuation de 8x2=16. Ainsi chaque étape de fusion réduit-elle le nombre de régions de 1.

## Extraction des zones plates à partir d'un nivellement

Dans les deux modes de segmentation ci-dessus, le point de départ a été une détection de zones homogènes sur une image de nivellements.

Pour détecter ces zones homogènes, on peut notamment utiliser la méthode de détection suivante.

On considère que deux pixels p et q appartiennent à la même région homogène d'une image $\hat{g}$ s'il existe entre les pixels p et q un chemin continu, constitué de pixels adjacents sur la matrice de pixels, tel que, entre tout couple (a,b) de points voisins sur ce chemin, un critère d'homogénéité soit vérifié. Ce critère d'homogénéité peut s'exprimer sous forme d'une relation binaire symétrique. Une liste non limitative de telles relations binaires symétriques est la suivante :

- $\hat{g}(a)=\hat{g}(b)$
- $|g(a)-g(b). <\mu$ où ,$\mu$ est une valeur constante prédéterminée
- $\psi \hat{g}(a) =g(a)$ et $\Psi \hat{g}(b)=\hat{g}(b)$ où $\psi$ est une transformation de voisinage.
- $g(a)\leq\phi g(b)$ et $g(b)\leq\phi \hat{g}(a)$ où $\phi$ est une fermeture morphologique
- $\gamma g(a)\leq g(b)$ et $\gamma g(b)\leq g(a)$ où $\gamma$ est une ouverture morphologique

Deux critères d'homogénéité peuvent être réunis pour produire un nouveau critère au moyen de conjonctions logiques telles que "et", "ou", "ou exclusif".

## Construction d'une image gradient

Dans les deux schémas de segmentation proposés on a construit une image gradient. Pour ce faire, on peut utiliser des techniques connues. Il peut être cependant avantageux d'utiliser les deux opérateurs $\alpha$ et $\beta$ qui ont été utilisés pour construire le nivellement ayant produit l'image de départ de la segmentation. On construira l'image gradient par soustraction de l'image $\beta$ de l'image $\alpha$ : $\alpha-\beta$.

## APPLICATION AU CODAGE

Pour faciliter la transmission ou le stockage d'images et de séquences d'images, il est souvent indispensable de les comprimer en les soumettant à des algorithmes de compression qui sont des algorithmes avec pertes. L'image décodée n'est pas identique à l'image originale ; elle peut même être plus ou moins fortement dégradée selon les taux de compression qui ont été atteints. Le défaut le plus visible s'appelle effet de blocs : on voit apparaître dans l'image des discontinuités le long des blocs de codage. A débit constant, les défauts sont d'autant plus visibles que l'image de départ était plus riche en détails. Plutôt que de voir se dégrader l'image de manière déplaisante et sans contrôle, l'invention propose de remplacer l'image à encoder par une version simplifiée constituée par un nivellement où on a "gommé" un certain nombre de détails de manière volontaire tout en préservant le plus possible la qualité perceptuelle de l'image. Le nivellement réduit le débit nécessaire pour coder l'image mais en même temps préserve les contours des structures restantes et une bonne qualité visuelle des images.

En utilisant les techniques de segmentation exposées dans la section précédente, on peut construire des images composites dans lesquelles chaque région de la segmentation est remplacée par un nivellement différent : les nivellements les plus forts étant appliqués aux zones de faible intérêt, les zones de fort intérêt (telles que les visages) étant remplacées par des nivellements très proches de l'image originale, voire par l'image originale elle-même. On a vu comment produire des familles de nivellements allant du plus ténu au plus grossier. On peut se servir de cette propriété pour réguler le débit d'un codeur de séquences d'images. On choisira pour chaque image le nivellement à l'entrée du codeur produisant le nombre de bits le plus proche de l'objectif qu'on s'était fixé.

Les codeurs de séquences, notamment MPEG, travaillent en deux modes : le mode intra et le mode inter. Dans le mode intra, c'est l'image de départ qui est encodée. Dans le mode inter, on essaie de prédire l'image courante à partir de la connaissance des images précédentes et on ne codera que l'erreur de prédiction. Dans ce cas, on peut également appliquer des nivellements aux erreurs de prédiction.

CAS DU NIVELLEMENT UNIQUE PSEUDO-SCALAIRE DAMAGES EN COULEURS

Comme indiqué plus haut, on peut effectuer un nivellement unique en remplaçant l'image en couleurs par un produit scalaire avec un vecteur de référence. On donnera maintenant un exemple d'application du nivellement vectoriel pseudo-scalaire à des images en couleurs. L'image vectorielle de référence est une image constante, dont la valeur en tout point est un vecteur constant $\vec{v}$. Le procédé est exécuté en quatre étapes, avec les notations des figures 7A et 7B.

Etape 1 : Projection

On prend le produit scalaire entre l'image vectorielle $\vec{f}$ de départ et le vecteur fixe $\vec{v}$ : f = $\vec{f}.\vec{v}$

Etape 2 : Génération de marqueur

L'image marqueur $\hat{g}$ peut être obtenue, soit par produit scalaire entre une image marqueur vectorielle avec l'image vectorielle de référence , $\vec{v}$, ou bien on peut la construire par un des procédés classiques à partir de l'image scalaire f.

Etape 3 : Nivellement scalaire

Les images $\hat{f}$ et $\hat{g}$ étant toutes deux des images scalaires, on peut leur appliquer un nivellement scalaire ordinaire : g' = Nivellement (f,g).

Etape 4 : Projection inverse dans l'espace vectoriel de départ

L'image vectorielle résultante $\vec{g}$ sera obtenue en effectuant la projection inverse de l'image scalaire g' dans l'espace vectoriel de départ. Ceci peut se faire de plusieurs manières. Celle qui va être décrite permet d'obtenir un résultat très semblable quel que soit le choix de l'espace de couleur.

Si $\vec{w}$ représente le vecteur dont l'origine représente la teinte noire et l'extrémité la teinte blanche, on effectue la projection inverse suivante :

- si $\hat{g}' > \hat{f}$, alors l'extrémité de $\vec{g}$ est prise sur $\vec{f}-\vec{w}$ de manière que $\vec{g}.\vec{v}$ = g' (figure 7A);
- si g' ≤ $\hat{f}$, alors l'extrémité de $\vec{g}$ est prise sur $\vec{f}$ de manière à ce que $\vec{g}.\vec{v}$ = g' (figure 7B).

**Revendications**

1. Procédé de construction d'une représentation simplifiée ou nivellement $\hat{g}$ d'une image d'origine par utilisation d'une image marqueur g, chaque image étant constituée par une matrice de pixels à chacun desquels est affecté au moins une valeur radiométrique (luminance ou chrominance), suivant lequel on déduit la valeur g (x) en chaque pixel :

   - dans les réglons où g est inférieure à une fonction ηf déduite de f, par augmentation de g du montant minimum qui Permet de constituer une zone connexe où la fonction g est constante en tout pixel, appelée plateau dans toute particule connexe où g<ηf, ηf étant une fonction partout supérieure ou égale à f sauf dans les zones où l'augmentation de g est limitée par la valeur correspondante de ηf, qui est localement inférieure à la valeur du plateau ;

   - et dans les régions où g est supérieure à une fonction ζf, déduite de f, supérieure ou égale à f, par diminution de g du montant minimum qui permet de constituer un plateau dans toute particule connexe où g>ζf, sauf dans les zones où la diminution de g est. limitée par la valeur correspondante de ζf, qui est localement supérieure à la valeur du plateau, les transformations η et ζ vérifiant les conditions ηf≤f et ζf≥f.

2. Procédé selon la revendication 1, **caractérisé en ce que** les transformations η et ζ sont choisies dans la liste suivante :

   - ζf=ηf=f
   - ζf=f+λ et ηf=f-λ, où λ désigne une valeur constante positive
   - ζf=φf et ηf=γf, où γ désigne une ouverture de la fonction f et φ une fermeture de f

- $\zeta f=\phi f+\lambda$ et $\eta f=\gamma f-\lambda$, où $\gamma$ désigne une ouverture de la fonction f et $\phi$ une fermeture, alors que $\lambda$ désigne une valeur constante.

3. Procédé selon la revendication 1, **caractérisé en ce qu'**on calculé une nouvelle valeur de g à l'aide de deux transformations de voisinage :

   - si $g(x) < \inf(\overset{\wedge}{\alpha g}(x)\eta f(x)) =\overset{\wedge}{\alpha g}(x) \wedge\eta f(x)$, on définit une nouvelle valeur $g^1(x)$ égale à $\inf(\alpha g(x),\eta f(x) = \alpha g(x) \wedge\eta f(x)$ ;
   - si $g(x) > \sup(\beta g(x), \zeta f(x)) = \beta g(x) \vee\zeta f(x)$, on définit une nouvelle valeur $g^1(x)$ égale à $\sup(\beta g(x), \zeta f(x)) = \beta g(x) \vee\zeta f(x)$ ;
   - si aucune des conditions précédentes n'est vérifiée, on affecte à $g^1(x)$ l'ancienne valeur g(x),

   $\alpha$ et $\beta$ répondant à une des définitions suivantes :

   - $\alpha g=\delta g$ et $\beta g=\varepsilon g$, où $\delta$ et $\varepsilon$ représentent respectivement la dilatation et l'érosion,
   - $\alpha g=g\vee(\delta g-\lambda)$ et $\beta g=g\wedge(\varepsilon g+\lambda)$, où $\lambda$ est une valeur constante,
   - $\alpha g=g\vee\delta\gamma g$ et $\beta g=g\wedge\varepsilon\phi g$, où $\gamma$ est une ouverture et $\phi$ une fermeture,
   - $\alpha g=g\vee(\delta\gamma g-\lambda)$ et $\beta g=g\wedge(\varepsilon\phi g+\lambda)$, où $\gamma$ est une ouverture et $\phi$ une fermeture et $\lambda$ est une valeur constante.

4. Procédé selon la revendication 3, **caractérisé en ce qu'**on examine tous les pixels de l'image et on en calcule une nouvelle valeur pour obtenir une nouvelle image $g^1(x)$ et

   - si $g^1(x) = g(x)$, on arrête le traitement ;
   - si $g^1(x) \neq g(x)$, on remplace l'image g(x) par l'image $g^1(x)$ pour effectuer une passe d'un traitement parallèle.

5. Procédé selon la revendication 3, **caractérisé en ce que**, dès que la nouvelle valeur $g^1(x)$ est connue pour un pixel x, on remplace l'ancienne valeur g(x) par cette nouvelle valeur et on l'utilise pour le calcul des nouvelles valeurs des points adjacents.

6. Procédé selon la revendication 5, **caractérisé en ce qu'**on calcule la nouvelle valeur $g^1(x)$ dans un ordre prédéterminé sur la matrice des pixels, indépendant de la valeur de la fonction g, éventuellement par des balayages successifs de l'image tels que deux balayages successifs se lassent dans l'ordre inverse l'un de l'autre et ce jusqu'à l'obtention d'une image qu'un balayage supplémentaire laisse inchangée.

7. Procédé selon la revendication 5, dans lequel on effectue le calcul de la nouvelle valeur $g^1(x)$ selon un ordre de traitement dépendant de la valeur des pixels en traitant les pixels pour lesquels $g<\eta f$ dans l'ordre des valeurs décroissances de g(x) et les pixels pour lesquels $g>\zeta f$ dans l'ordre des valeurs croissantes de g(x).

8. Procédé selon la revendication 1, selon lequel on effectue un nivellement d'une image vectorielle ou couleur, destiné à fournir une image simplifiée pour laquelle plusieurs valeurs radiométriques sont affectées à chaque pixel en tant que composantes en construisant indépendamment un nivellement de chacune de ses composantes.

9. Procédé selon la revendication 1, appliqué à des images vectorielles ou des images couleur, selon lequel on effectue un nivellement vectoriel dans lequel le marqueur est produit à l'aide d'un filtre médian vectoriel.

10. Procédé selon la revendication 1, appliqué à des séquences d'images, selon lequel on constitue un volume 3D par juxtaposition des images successives d'une séquence vidéo le long d'un axe temporel, auquel on applique un nivellement 3D utilisant une image marqueur obtenue dans le volume 3D.

11. Procédé de transmisssion ou de stockage d'images f sous forme dégradée, **caractérisé en ce qu'**on applique un algorithme de compression à des images dans lesquelles tout ou partie a été remplacé par un nivellement obtenu conformément à l'une quelconque des revendications 1 à 10 à partir des images f.

12. Procédé selon la revendication 1, **caractérisé en ce qu'**on déduit la valeur g(x) en deux étapes, une de sous-nivellement $niv^-(f,g)$, ne produisant des plateaux que dans les régions où g est inférieure à la fonction $\eta f$, et une autre de sur-nivellement $niv^-(f,g)$, ne produisant des plateaux que dans les régions où g est supérieure à la fonction $\zeta f$, le nivellement complet étant alors obtenu en faisant suivre un sous-nivellement et un sur-nivellement :

$$niv^1(f,g) = niv^+(niv^-(f,g),g)$$

ou alternativement en faisant suivre un sur-nivellement et un sous-nivellement :

$$niv^2(f,g) = niv^-(niv^+(f,g),g).$$

13. Procédé selon la revendication 1, appliqué à des images vectorielles, notament couleur, selon lequel on applique un nivellement ordinaire à une image scalaire numérique dont la valeur en chaque point est une fonction connue des trois couleurs en ce point, par exemple obtenue par produit scalaire entre l'image vectorielle, de départ et une image vectorielle de référence, et on effectue la projection inverse du résultat de ce nivellement dans l'espace vectoriel ce départ.

## Patentansprüche

1. Verfahren zum Aufbau einer vereinfachten Darstellung oder Nivellierung *g* eines Ursprungsbildes f durch Verwendung eines Markierungsbildes g, wobei jedes Bild gebildet ist durch eine Matrix aus Pixeln, jedem von welchen ein radiometrischer Wert (Luminanz oder Chrominanz) zugewiesen ist, wobei nach dem Verfahren der Wert *g* (x) in jedem Pixel abgeleitet wird:

   - in den Gebieten, wo g kleiner als eine Funktion ηf ist, die von f abgeleitet ist, durch Vergrößerung von g um den minimalen Betrag, der es gestattet eine verwandte Zone zu bilden, wo die Funktion g ein Regelmäßigkeit Merkmal aufweist, genannt Plateau in jedem verwandten Partikel wo g< ηf, wobei pf eine Funktion ist, die überall niedriger oder gleich f ist, außer in den Zonen, wo die Vergrößerung von g begrenzt ist durch den entsprechenden Wert von ηf, der lokal kleiner ist als der Wert des Plateaus;

   - und in den Gebieten, wo g größer als eine Funktion ζf ist, die von f abgeleitet und größer oder gleich f ist, durch Verringerung von g um den Minimalbetrag, der es gestattet ein Plateau in jedem verwandten Partikel zu bilden wo g>ζf, außer in den Zonen, wo die Verringerung von g begrenzt ist durch den entsprechenden Wert von ζf, der lokal größer als der Wert des Plateaus ist, wobei die Transformationen η und ζ die Bedingungen ηf≤f und ζf≤f erfüllen.

2. Verfahren nach Anspruch 1, **dadurch gekennzeichnet, dass** die Transformationen η und ζ aus der folgenden Liste gewählt sind:

   - ζf=ηf=f

   - ζf=f+λ und ηf=f-λ, wobei λ einen konstanten positiven Wert bezeichnet,

   - ζf=φf und ηf=γf, wobei γ eine Öffnung der Funktion f und φ eine Schließung von f bezeichnen,

   - ζf=φsf+λ und ηf=γf-λ, wobei γ eine Öffnung der Funktion f und φ eine Schließung bezeichnet, während λ einen konstanten Wert bezeichnet.

3. Verfahren nach Anspruch 1, **gekennzeichnet**

**durch** das Berechnen eines neuen Werts von g mit Hilfe von zwei Nachbarschaftstransformationen:

   - wenn g(x)< inf ($\alpha\hat{g}(x)\eta f(x)$) = $\alpha\hat{g}(x)^\wedge\eta f(x)$, Definieren eines neuen Werts $g^1$ (x) gleich inf ($\alpha g$ (x) ,ηf(x)) = αg(x) $\wedge_\lambda$ ηf (x);

   - wenn g(x) >sup(βg(x) ,ζf(x)) =β$\hat{g}$(x) $\vee\zeta$f(x), Definieren eines neuen Werts $g^1$ (x) gleich sup (βg (x), ζ(x))= βg(x) $\vee\zeta$f(x);

   - wenn keine der obigen Bedingungen erfüllt ist, Zuweisen des alten Werts g(x) an $g^1$ (x),

   wobei α und β einer der folgenden Definitionen gehorchen;

   - αg=δg und βg=εg, wobei δ und ε jeweils die Dilatation und die Erosion darstellen,

   - αg=g∨ (δg-λ) und βg=g^ (εg+λ), wobei λ ein konstanter Wert ist,

   - αg=g∨ δγg und βg=g^εφg, wobei γ eine Öffnung und φ eine Schließung ist,

   - αg=g∨ (δγg-λ) und βg=g^ (εφg+λ), wobei γ eine Öffnung und φ eine Schließung ist, und λ ein konstanter Wert.

4. Verfahren nach Anspruch 3, **gekennzeichnet durch** die Untersuchung aller Pixel des Bildes und daraus Berechnen eines neuen Werts zur Gewinnung eines neuen Bilds $g^1$(x) und

   - wenn $g^1$(x) = g(x) Beenden des Vorgangs;

   - wenn $g^1$(x) ≠ g(x), Ersetzen des Bildes g(x) **durch** das Bild $g^1$(x) zur Durchführung eines Durchgangs eines Parallelvorgangs.

5. Verfahren nach Anspruch 3, **dadurch gekennzeichnet, dass** sobald der neue Wert $g^1$(x) für ein Pixel x bekannt ist, der alte Wert g(x) durch den neuen Wert ersetzt wird und für die Berechnung von neuen Werten benachbarter Punkte verwendet wird.

6. Verfahren nach Anspruch 5, **gekennzeichnet durch** das Berechnen des neuen Werts $g^1$(x) in vorbestimmter Reihenfolge an der Pixelmatrix, unabhängig vom Wert der Funktion g, eventuell **durch** aufeinanderfolgende Abtastungen des Bildes, so dass zwei aufeinanderfolgende Abtastungen in zueinander inverser Reihenfolge geschehen, und bis zur Gewinnung eines Bildes, das von einer zusätzlichen Abtastung unverändert gelassen wird.

7. Verfahren nach Anspruch 5, bei welchem die Berechnung des neuen Werts $g^1$(x) gemäß einer Vorgangsreihenfolge geschieht, die vom Wert der Pixel abhängt, wobei die Pixel für welche g<ηf gilt in der Reihenfolge der abnehmenden Werte von g(x) verarbeitet werden, und die Pixel, für welche g>ζf gilt, in der Reihenfolge der wachsenden Werte von g(x) verarbeitet werden.

8. Verfahren nach Anspruch 1, bei dem eine Nivellierung eines vektoriellen oder farbigen Bildes bewirkt wird, bestimmt zur Bereitstellung eines vereinfachten Bildes für welches jedem Pixel mehrere radiometrische Werte als Komponenten zugewiesen sind, unter unabhängiger Bildung einer Nivellierung jeder dieser Komponenten.

9. Verfahren nach Anspruch 1, angewendet auf vektorielle Bilder oder farbige Bilder, bei dem eine vektorielle Nivellierung durchgeführt wird, bei welcher die Markierung mit Hilfe eines vektoriellen Mittlungsfilters erzeugt wird.

10. Verfahren nach Anspruch 1, angewendet auf Bildsequenzen, wobei ein 3D-Volumen gebildet wird durch Überlagerung der aufeinanderfolgenden Bilder einer Videosequenz entlang der Zeitachse, auf welche man eine 3D-Nivellierung anwendet, unter Verwendung eines Markierungsbildes, das in dem 3D-Volulmen gewonnen wird.

11. Verfahren zur Übertragung oder Speicherung von Bildern f in abgestufter Form, **gekennzeichnet durch** die Anwendung eines Kompressionsalgorithmus auf die Bilder, bei dem ganz oder teilweise eine Ersetzung geschah **durch** eine Nivellierung, die gemäß einem der Ansprüche 1 bis 10 ausgehend von den Bildern f erhalten wurde.

12. Verfahren nach Anspruch 1, **gekennzeichnet durch** die Ableitung des Werts g(x) in zwei Stufen, eine der Untemivellierung niv⁻ (f,g), welche nur Plateaus in den Regionen erzeugt, wo g kleiner als die Funktion ηf ist, und eine weitere der Ubernivellierung niv⁺(f,g), welche Plateaus nur in den Gebieten erzeugt, wo g größer als die Funktion ζf ist, wobei die vollständige Nivellierung dann gewonnen wird **durch** die Abfolge einer Unternivellierung und einer Übernivellierung:

$$niv^1(f,g) = niv^+(niv^-(f,g),g)$$

oder alternativ **durch** Abfolge einer Ubernivellierung und einer Unternivellierung:

$$niv^2(f,g) = niv^-(niv^+(f,g),g).$$

13. Verfahren nach Anspruch 1, angewendet auf vektorielle Bilder, insbesondere farbige, wobei eine gewöhnliche Nivellierung auf ein skalares digitales Bild angewendet wird, dessen Wert in jedem Punkt eine bekannte Funktion der drei Farben in diesem Punkt ist, zum Beispiel gewonnen durch das Skalarprodukt zwischen dem vektoriellen Ausgangsbild und einem vektoriellen Referenzbild, und Durchführung der inversen Projektion des Resultats dieser Nivellierung im Ausgangsvektorraum.

**Claims**

1. Method for construction of a simplified representation or levelling $g$ of an original image $f$ by use of a marker image $g$, each image being constituted by a matrix of pixels, to each of which there is allocated at least one radiometric value (luminance or chrominance), according to which the value $g(x)$ is deduced in each pixel:

   - in the regions where g is less than a function ηf deduced from f, by increasing g by the minimum amount which makes it possible to constitute an associated area where the function g presents a regularity feature, known as the plateau, in each associated particle where g< ηf, ηf being in all cases a function which is smaller than, or equal to f, except in the areas where the increase of g is limited by the corresponding value of ηf, which is locally less than the value of the plateau;
   - and in the regions where g is greater than a function ζf, which is deduced from f, and is greater than, or equal to f, by decreasing g by the minimum amount which makes it possible to constitute a plateau, in each associated particle where g > ζf, except in the areas where the decrease of g is limited by the corresponding value of ζf, which is locally greater than the value of the plateau, the transformation η and ζ verifying the conditions ηf≤f and ζ≥f.

2. Method according to claim 1, **characterised in that** the transformations η and ζ are selected from amongst the following list:

   - ζf=ηf=f
   - ζf=f+λ and ηf=f- λ, in which λ designates a positive constant value
   - ζf=φf and ηf=γf, where y designates an opening of the function f and φ designates closure off
   - ζf=φf+λ and ηf=γf-λ, where γ designates an opening of the function f and φ designates closure, whereas λ designates a constant value.

3. Method according to claim 1, **characterised in that** a new value of g is calculated by means of two proximity transformations:

- if $g(x)<\inf(\alpha\hat{g}(x)\eta f(x))= \alpha\hat{g}(x)\wedge\eta f(x)$, there is definition of a new value $g^1(x)$, which is equal to $\inf(\alpha g(x),\eta f(x))= \alpha g(x)\wedge\eta f(x)$;
- if $g(x)>\sup(\beta g(x),\zeta f(x))= \beta g(x)\vee\zeta f(x)$, there is definition of a new value $g^1(x)$, which is equal to $\sup(\beta g(x),\zeta f(x))= \beta g(x)\vee\zeta f(x)$;
- if none of the preceding conditions proves correct, the former value $g(x)$ is allocated to $g^1(x)$,

with $\alpha$ and $\beta$ complying with one of the following definitions:

- $ag=\delta g$ and $\beta g=\varepsilon g$, where $\delta$ and $\varepsilon$ represent respectively expansion and erosion,
- $ag=g\vee(\delta g-\lambda)$ and $\beta g=g\wedge(\varepsilon g+\lambda)$, where $\lambda$ is a constant value,
- $\alpha g=g\vee\delta\gamma g$ and $\beta g=g\wedge\varepsilon\varphi g$, where $\gamma$ is an opening and $\varphi$ is a closure,
- $\alpha g=g\vee(\delta\gamma g-\lambda)$ and $\beta g=g\wedge(\varepsilon\varphi g+\lambda)$, where $\gamma$ is an opening and $\varphi$ is a closure, and $\lambda$ is a constant value.

4. Method according to claim 3, **characterised in that** all the pixels of the image are examined, and a new value of them is calculated in order to obtain a new image $g^1(x)$, and

- if $g^1(x) = g(x)$, the processing is stopped;
- if $g^1(x) \neq g(x)$, the image $g(x)$ is replaced by the image $g^1(x)$, in order to carry out a parallel processing step.

5. Method according to claim 3, **characterised in that** as soon as the new value $g^1(x)$ is known for a pixel x, the former value $g(x)$ is replaced by this new value, and it is used for calculation of the new values of the adjacent points.

6. Method according to claim 5, **characterised in that** the new value $g^1(x)$ is calculated in a predetermined order on the matrix of the pixels, independently of the value of the function g, optionally by successive scans of the image, such that two successive scans take place in inverse order from one another, until an image is obtained which an additional scan leaves unchanged.

7. Method according to claim 5, wherein the new value $g^1(x)$ is calculated according to a processing order which depends on the value of the pixels, by processing the pixels for which $g<\eta f$, in the order of the decreasing values of $g(x)$, and the pixels for which $g>\zeta f$, in the order of the increasing values of $g(x)$.

8. Method according to claim 1, according to which levelling is carried out of a vectorial or colour image, which is designed to provide a simplified image, wherein several radiometric values are allocated to each pixel as components, by constructing independently levelling of each of its components.

9. Method according to claim 1, applied to vectorial images or colour images, according to which vectorial levelling is carried out in which the marker is produced by means of a vectorial median filter.

10. Method according to claim 1, applied to image sequences, according to which a 3D volume is constituted by juxtaposition of the successive images of a video sequence along a temporal axis, to which 3D levelling is applied using a marker image obtained in the 3D volume.

11. Method for transmission or storage of images fin a shaded form, **characterised in that** a compression algorithm is applied to images in which all or part has been replaced by levelling obtained according to any of claims 1 to 10 from images f.

12. Method according to claim 1, **characterised in that** the value $g(x)$ is deduced in two steps, one of under-levelling $niv^-(f,g)$, which produces plateaux only in the regions where g is lower than the function $\eta f$, and another of over-levelling $niv^+(f,g)$, which produces plateaux only in the regions where g is higher than the function $\zeta f$, the complete levelling then being obtained by having under-levelling and over-levelling carried out:

$$niv^1(f,g)=niv^+(niv^-(fg),g)$$

or alternatively by having over-levelling and under-levelling carried out:

$$niv^2(f,g)=niv^-(niv^+(f,g),g).$$

13. Method according to claim 1, applied to vectorial images, in particular colour images, according to which ordinary levelling is applied to a digital scalar image, the value of which at each point is a known function of the three colours at this point, for example obtained by a scalar product between the initial vectorial image and a reference vectorial image, and inverse projection is carried out of the result of this levelling in the initial vectorial space.

FIG.1.

# FIG.2.

A

B

C

EP 1 080 448 B1

FIG.3.

A

C

B

D

EP 1 080 448 B1

# FIG.4.

FIG.5.

Valeur radiométrique

FIG.6.

f

$\widehat{g}$

g

x

$\vec{f}$

$\vec{g}'$

$\vec{w}$

$\widehat{f}$

$\widehat{g}'$

FIG.7A.

$\vec{f}$

$\vec{g}'$

$\vec{w}$

$\widehat{g}'$

$\widehat{f}$

FIG.7B.